# EUROPEAN PATENT SPECIFICATION

(11) **EP 1 592 646 B1**
(45) Date of publication and mention of the grant of the patent: **02.01.2008**
(21) Application number: 04708816.6
(22) Date of filing: 06.02.2004
(51) Int. Cl.: C04B 30/00, C04B 28/26, C04B 14/12, C04B 40/00

(54) **COMPOSITE MATERIALS**
VERBUNDWERKSTOFFE
MATIERES COMPOSITES

(30) Priority: 08.02.2003 GB 0302966
(43) Date of publication of application: 09.11.2005
(73) Proprietor: Marine Systems Technology Limited, Woodford Park Industrial Estate Winsford Cheshire CW7 2RB (GB)
(72) Inventor: DOWER, John, Edmund, Warrington, Cheshire WA6 7LT (GB)
(74) Representative: Harrison Goddard Foote
(86) International application number: PCT/GB2004/000464
(87) International publication number: WO 2004/069766

(56) References cited:
- WO-A-20/04018919
- GB-A- 1 413 980
- GB-A- 2 370 870
- US-A- 3 562 370

## Description

This invention concerns composite materials, particularly though not exclusively, lightweight composites which are preferably non-combustible or fire resistant.

Such materials may be used for construction purposes and thus should be sufficiently durable and have adequate inherent strength for their required use. In particular, such materials are intended for use where fire resistance is important and where, in the event of a fire, smoke or other toxic emissions from the material are minimised.

Composites based on ultra-lightweight mineral aggregates offer non-combustible properties but are generally difficult to manufacture in board or sheet form with adequate strength and sufficiently low mass. Problems arise in attempting to combine lightweight properties with strength. This results from an inherent instability caused when curing or drying composite materials having very low specific gravity while containing sufficient active material to generate the necessary physical characteristics.

The invention is predicated on the desire to separate the properties of low mass from the properties of strength whereby to combine these two desirable properties.

Existing products such as those made from lightweight expanded clay aggregate and used in the building industry are too heavy for most non-construction applications. However, a composite material such as described in specification EP0971862 was developed specifically for the building industry as a thermal and acoustic insulator. While this product is stable and of low mass it is essentially porous owing to the size of the particles from which it is made, and an extremely low level of binder used in its manufacture. Although providing good thermal and acoustic insulation and stability, it is of only modest physical strength.

Specification GB 2 370 870 describes an insulating material in which a particulate material and an organic resin are premixed in a fluidic condition and subsequently formed into a structure.

Specification US 3,562,370 describes a method of producing cellular bodies in which, once again, particulate material is mixed with an expanding, foamable organic or inorganic material and subsequently formed into a board by the application of heat.

It is an object of the present invention to provide a lightweight stable composite material of the kind referred to, but with improved physical properties, including when necessary, its fire resistance, by introducing in a controlled manner, a filler material into the interstitial spaces of the composite material.

According to the present invention there is provided a filled composite material comprising a preformed syntactic composite material aggregate board of particulate structure defining interstitial spaces between the particles thereof, having been impregnated in the interstitial spaces to a predetermined depth of the board by a reinforcing filler.

Also according to the present invention there is provided a method of producing a filled composite material comprising the steps of providing a preformed syntactic composite material aggregate board of particulate structure defining interstitial spaces between the particles thereof, and causing a fluidic filler material to be drawn into the interstitial spaces to a predetermined depth of the board by applying to the preformed composite board at least a partial vacuum.

Embodiments of the invention will now be described, by way of example, with reference to the accompanying drawings in which:-
Fig. 1 illustrates the production of a filled composite material in accordance with the invention, prior to introduction of a filler material.
Fig. 2 illustrates the production after the filler material is introduced.
Fig. 3 shows an example of a filled composite material made in accordance with the invention; and
Figs. 4, 5 and 6 show three further examples of filled composite materials made in accordance with the invention.

All views shown in the drawings are somewhat diagrammatic for ease of illustration.

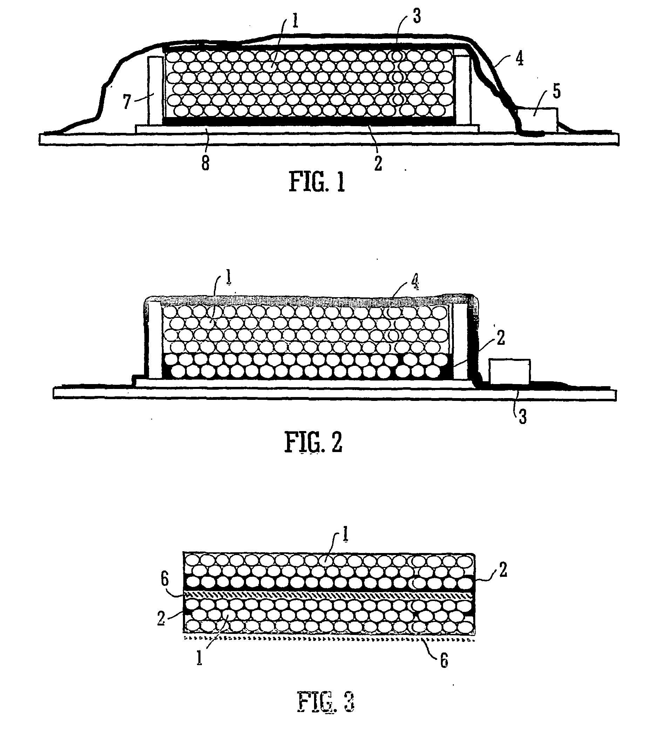

Referring now to Fig. 1 a filled composite material in accordance with the invention is produced, in this example, by introducing a preformed aggregate board of a syntactic composite material composed of bonded and/or sintered foamed glass pellets or of foamed or expanded clay pellets bonded by an inorganic binder or a thermosetting resin material and preformed into a board, into a simple mould 7 into which has been introduced initially a layer of fluidic filler material 2 which may be in liquid or paste form. The filler may be, for example, a mixture of sodium silicate and an aluminium phosphate hardener.

Over the board 1 and the mould 7 is placed a bleed membrane 3 which may be a needle felted material, and this is superimposed by a vacuum bag 4 to which is connected a vacuum pump 5 in order to withdraw air from within the bag.

Upon application of a partial vacuum, for example in the region of 60%, the fluid filler material 2 is drawn upwardly into the interstitial spaces between the particles of the composite material board 1. This condition is illustrated in Fig. 2 which shows the filler material impregnated into the board to approximately a third of its depth.

The filled composite material so formed is allowed to cure in an oven at around 60°C and may then be removed from the mould and dried at a temperature of, for example, 80°C.

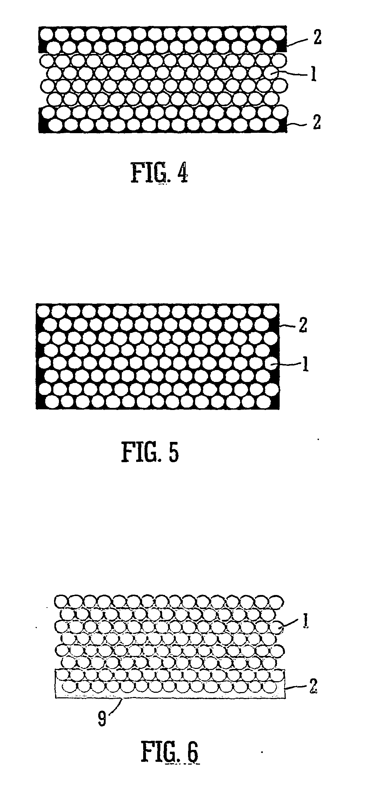

As illustrated in Figs. 4 and 5, the degree to which the filler material is drawn into the board may be varied according to requirements. For example, in Fig. 4 the filler has been introduced into the two opposed faces of the board to approximately the same extent and this provides a strengthened surface layer on each face of the board, whereas in Fig. 5, sufficient filler has been provided for complete penetration throughout the board thickness.

Referring now to Fig. 6 it is possible to retain a layer of the filler material on the surface of the board by including within it particles of a size greater than the interstitial spaces of the board so that some of the filler material will impregnate the spaces whilst the remainder containing the larger particles will remain on the surface thus to provide, for example, a smooth textured or patterned surface layer illustrated at 9 in Fig. 6.

Fig. 3 shows a board made by the process illustrated in Figs. 1 and 2, but in this case a preformed reinforcing material, such as sheets 6, for example of metal mesh are included, one between two layers of the unfilled composite board, and one other on the opposed face of one of the boards. The filler is introduced, in this example, by coating the mesh sheets with a filler paste before assembly of fine board and before application of the vacuum. Thus, the mesh sheets are integrated with, and keyed to, the composite material.

The applicants have carried out a number of experiments to determine the effects of introducing the filler material into a particulate composite material board by applying a vacuum as described in relation to Figures 1 to 6. The results of such experiments are given in the following examples.

### Example 1

A board of sintered foamed glass pellets was filled with a mixture consisting of a sodium silicate mixed with 80 parts per 100 of an aluminium phosphate hardener. The filler material was placed into the mould to a depth of 3mm and subjected to the vacuum process whereupon the filler was found to have penetrated the board to a depth of 10mm. The filled composite material so formed was allowed to cure at a temperature of 60°C and then dried at 80°C.

Whereas the original board, before the filling process, was insufficiently durable to retain a screw, the resultant filled panel was found to receive and firmly to retain a screw.

The composite material and the filler were selected for their fire resistant properties and when the filled board was subjected to a propane flame the composite material glowed brightly but generated no significant fumes. The material retained its integrity after cooling.

### Example 2

A similar board of sintered foam glass pellets was filled with an aqueous plaster mixture where the filler was placed into the mould to a depth of 3mm and after the vacuum process was found to have penetrated to a depth of 10mm. The filled composite material was allowed to cure at a temperature of 40°C and then dried at 60°C. When subjected to a propane flame the filled composite material glowed brightly but generated no significant fumes and the material retained its integrity after cooling.

Whereas the original board, before the filling process, was insufficiently durable to retain a screw, the resultant filled panel was found to receive and firmly to retain a screw.

### Example 3

Two sheets of sintered foamed glass pellets, each sheet being of 23mm in thickness were assembled in a mould separated by a sheet of metal mesh as illustrated in Fig. 3. The whole assembly was then filled under vacuum with a silicate mixture as detailed in Example 1. The resultant panel had a thickness of 48mm and was entirely filled with the filler material thus to produce a substantial homogenous mass throughout its cross-section.

When subjected to a propane flame the material glowed brightly but generated no significant fumes and retained its integrity after cooling.

### Example 4

A board consisting of thermo setting resin-bonded foamed clay pellets was cured and dried at elevated temperature and then impregnated, as before, with a silicate mixture under vacuum and cured at elevated temperature. When subjected to a propane flame the composite glowed brightly but generated only modest fumes. The composite became charred between the particles but retained its integrity after cooling.

### Example 5

A board consisting of foamed clay pellets bonded using an inorganic binder, was impregnated with the same silicate mixture and cured at elevated temperature. Again, when subjected to a propane flame, the filled composite glow brightly but generated no significant fumes, and retained its integrity after cooling.

### Example 6

A board of sintered foamed glass pellets was impregnated under vacuum using a commercially available solid surface polyester based resin system. The result provided a heavily filled decorative surface layer and penetration of the particulate board with the resin to a depth of 5mm. The finished board was found to be physically stable.

### Example 7

A board of sintered foamed glass pellets was impregnated using a commercially available water-extendible polyester resin system filled with mineral fillers and aggregates. The resultant board provided a heavily filled decorative "stone effect" surface layer, and penetration of the board with unfilled resin to a depth of 5mm. The board displayed a hard and stable surface.

Certain clear advantages are evident from the production of a filled composite material in accordance with the invention. These consist primarily of the partial or complete impregnation of the filler material into and throughout the interstitial space within the composite material when compared with a conventional process of mechanically pressing filler material onto the surface of such a composite material which was only partially effective owing to the resultant poor and uneven penetration of the filler material. Since only atmospheric pressure is applied to the surface of the composite material in the production process, this avoids any tendency for the composite material to crack or become surface damaged.

The application of a partial vacuum to the composite material not only provides the force necessary to consolidate the material but also enables a controlled impregnation into the interstices of the lightweight particles. Since atmospheric pressure is applied via the vacuum bag to the surface of the composite material, any unevenness of said surface is readily accommodated.

Drawing the filler material into the interstices of the composite material is efficient not only with regard to total penetration but it is found to produce uniformity of penetration, the degree of which depends upon the amount of fluid filler used and can be calibrated to produce boards having different physical characteristics according to their required purpose.

Since the basic structure of the composite material board is established during its initial manufacture, the process of filling the board and thus producing the finished board is substantially shortened without the need for extended curing times under pressure. Thus, the capital cost of setting up an operating the process is minimised.

It is not intended to limit the invention to the above examples only. For example, non-combustible filler materials include, but are not limited to, formulations based on aqueous systems such as plaster, cement, silicates and the like while the process is equally suited to resin-based filler systems which include, for example, polyester, phenolic, acrylic, epoxy, or polythene, with or without the addition of fillers such as fire retardant or decorative additives, or as foams.

## Claims

1. A filled composite material comprising a preformed syntactic composite material aggregate board of particulate structure defining interstitial spaces between the particles thereof, having been impregnated in the interstitial spaces to a predetermined depth of the board by a reinforcing filler.

2. A filled composite material according to Claim i, wherein the preformed composite material is composed of particles of a lightweight mineral material.

3. A filled composite material according to Claim 1 or Claim 2, wherein the preformed composite material is composed of sintered foamed glass pellets.

4. A filled composite material according to Claim 1 or Claim 2, wherein the preformed composite material is composed of foamed clay pellets.

5. A filled composite material according to any preceding claim, wherein the reinforcing filler is non-combustible.

6. A filled composite material according to any preceding claim, wherein the reinforcing filler is derived from gypsum.

7. A filled composite material according to any one of Claims 1 to 5, wherein the reinforcing filler is an alkaline silicate with a hardener.

8. A filled composite material according to any one of Claims 1 to 4, wherein the reinforcing filler is an organic substance.

9. A filled composite material according to any one of Claims 1 to 4, wherein the reinforcing filler is a thermosetting resin.

10. A method of producing a filled composite material comprising the steps of providing a preformed syntactic composite material aggregate board of particulate structure defining interstitial spaces between the particles thereof, and causing a fluidic filler material to be drawn into the interstitial spaces to a predetermined depth of the board by applying to the preformed composite board at least a partial vacuum.

11. A method according to Claim 10, wherein the fluidic filler is a curable material, and including the step of causing the filler material to cure within the interstitial spaces.

12. A method according to Claim 10 or Claim 11, including the step of curing the filler material at above ambient temperature.

13. A method according to Claim 10, wherein the fluidic filler material is introduced into a mould followed by the preformed composite material and a bleed membrane, and the mould is disposed within a vacuum bag from which air is extracted by a pump to apply said partial vacuum.

14. A method according to any one of Claims 10 to 13 including the step of introducing a preformed reinforcing material and causing same to become integrated with the preformed composite by the filler material.

## Patentansprüche

1. Mit Füllstoff versetztes Verbundmaterial, mit einer ein syntaktisches Verbundmaterial aufweisenden vorgeformten Aggregatplatte mit Partikelstruktur, die Zwischenräume zwischen ihren Partikeln aufweist und in den Zwischenräumen bis zu einer vorbestimmten Tiefe der Platte mit einem verstärkenden Füllstoff getränkt worden ist.

2. Mit Füllstoff versetztes Verbundmaterial nach Anspruch 1, wobei das vorgeformte Verbundmaterial aus Partikeln aus einem leichten anorganischen Material besteht.

3. Mit Füllstoff versetztes Verbundmaterial nach Anspruch 1 oder 2, wobei das vorgeformte Verbundmaterial aus gesinterten Schaumglaspellets besteht.

4. Mit Füllstoff versetztes Verbundmaterial nach Anspruch 1 oder 2, wobei das vorgeformte Verbundmaterial aus geschäumten Ton- oder Lehmpellets besteht.

5. Mit Füllstoff versetztes Verbundmaterial nach einem der vorhergehenden Ansprüche, wobei der verstärkende Füllstoff nicht brennbar ist.

6. Mit Füllstoff versetztes Verbundmaterial nach einem der vorhergehenden Ansprüche, wobei der verstärkende Füllstoff von Gips abgeleitet ist.

7. Mit Füllstoff versetztes Verbundmaterial nach einem der Ansprüche 1 bis 5, wobei der verstärkende Füllstoff ein alkalisches Silikat mit einem Härter ist.

8. Mit Füllstoff versetztes Verbundmaterial nach einem der Ansprüche 1 bis 4, wobei der verstärkende Füllstoff eine organische Substanz ist.

9. Mit Füllstoff versetztes Verbundmaterial nach einem der Ansprüche 1 bis 4, wobei der verstärkende Füllstoff ein in Wärme aushärtendes Harz ist.

10. Verfahren zum Herstellen eines mit Füllstoff versetzten Verbundmaterials, beinhaltend die Schritte Bereitstellen einer ein syntaktisches Verbundmaterial aufweisenden vorgeformten Aggregatplatte mit Partikelstruktur, die Zwischenräume zwischen ihren Partikeln aufweist, und Bewirken, dass ein fluidförmiger Füllstoff bis zu einer vorbestimmten Tiefe der Platte in die Zwischenräume gesaugt wird, indem die vorgeformte Verbundplatte wenigstens mit einem Teilvakuum beaufschlagt wird.

11. Verfahren nach Anspruch 10, wobei der fluidförmige Füllstoff ein aushärtbares Material ist, und beinhaltend den Schritt Bewirken, dass der Füllstoff in den Zwischenräumen aushärtet.

12. Verfahren nach Anspruch 10 oder 11, beinhaltend den Schritt Aushärten des Füllstoffes bei einer Temperatur oberhalb der Umgebungstemperatur.

13. Verfahren nach Anspruch 10, wobei der fluidförmige Füllstoff in eine Form eingebracht wird gefolgt von dem vorgeformten Verbundmaterial und einer Entlüftungsmembran und wobei die Form in einem Vakuumbeutel angeordnet wird, aus welchem Luft mittels einer Pumpe abgesaugt wird, um das Teilvakuum aufzubauen.

14. Verfahren nach einem der Ansprüche 10 bis 13, beinhaltend den Schritt Einbringen eines vorgeformten Verstärkungsmaterials und Bewirken, dass dieses durch den Füllstoff in das vorgeformte Verbundmaterial integriert wird.

## Revendications

1. Matériau composite chargé comprenant un matériau composite syntactique préformé en panneau d'agrégat de particules définissant des espaces interstitiels entre les particules de celui-ci, dont les espaces interstitiels ont été imprégnés jusqu'à une profondeur prédéterminée du panneau par une charge de renforcement.

2. Matériau composite chargé selon la revendication 1, dans lequel le matériau composite préformé est constitué de particules d'un matériau minéral léger.

3. Matériau composite chargé selon la revendication 1 ou la revendication 2, dans lequel le matériau composite préformé est constitué de granulés de verre foisonnés frittés.

4. Matériau composite chargé selon la revendication 1 ou la revendication 2, dans lequel le matériau composite préformé est constitué de granulés d'argile foisonnés.

5. Matériau composite chargé selon l'une des revendications précédentes, dans lequel la charge de renforcement est non combustible.

6. Matériau composite chargé selon l'une des revendications précédentes, dans lequel la charge de renforcement est dérivée du gypse.

7. Matériau composite chargé selon l'une des revendications 1 à 5, dans lequel la charge de renforcement est un silicate alcalin avec un durcisseur.

8. Matériau composite chargé selon l'une des revendications 1 à 4, dans lequel la charge de renforcement est une substance organique.

9. Matériau composite chargé selon l'une des revendications 1 à 4, dans lequel la charge de renforcement est une résine thermodurcissable.

10. Procédé de production d'un matériau composite chargé comprenant les étapes consistant à fournir un matériau composite syntactique préformé en panneau d'agrégats de particules définissant des espaces interstitiels entre les particules de celui-ci, et à permettre au matériau de charge fluide d'être attiré dans les espaces interstitiels jusqu'à une profondeur prédéterminée du panneau par application sur le panneau composite préformé d'au moins un vide partiel.

11. Procédé selon la revendication 10, dans lequel la charge fluide est un matériau durcissable et qui comprend l'étape consistant à provoquer le durcissement du matériau de charge à l'intérieur des espaces interstitiels.

12. Procédé selon la revendication 10 ou la revendication 11, comprenant l'étape consistant à durcir le matériau de charge à une température au-delà de la température ambiante.

13. Procédé selon la revendication 10, dans lequel le matériau de charge fluide est introduit dans un moule, suivi par le matériau composite préformé et une membrane de dégorgement, et le moule est disposé à l'intérieur d'une poche de vide dont l'air est extrait par une pompe pour appliquer ledit vide partiel.

14. Procédé selon l'une quelconque des revendications 10 à 13, comprenant l'étape consistant à introduire un matériau de renforcement préformé et à provoquer l'intégration de celui-ci avec le composite préformé par le matériau de charge.
